(19) Europäisches Patentamt
European Patent Office
Office européen des brevets

(11) Veröffentlichungsnummer: **0 150 766**
**B1**

(12) **EUROPÄISCHE PATENTSCHRIFT**

(45) Veröffentlichungstag der Patentschrift: **14.03.90**

(51) Int. Cl.$^5$: **A 01 C 1/08**

(21) Anmeldenummer: **85100400.2**

(22) Anmeldetag: **16.01.85**

(54) **Vorrichtung zum Feuchtbeizen von Saatgut.**

(30) Priorität: **30.01.84 DE 3403069**

(43) Veröffentlichungstag der Anmeldung:
**07.08.85 Patentblatt 85/32**

(45) Bekanntmachung des Hinweises auf die Patenterteilung:
**14.03.90 Patentblatt 90/11**

(84) Benannte Vertragsstaaten:
**AT BE CH DE FR GB IT LI LU NL SE**

(56) Entgegenhaltungen:
**DE-B-1 211 013**
**FR-A-2 302 142**
**US-A-3 213 867**

**SOVIET INVENTIONS ILLUSTRATED, C07, 26. März 1980, Nr. B5575, Derwent Publications LTD., Section General/Mechanical; & SU - A - 665 835 (CHENTSOV et al.) 07.06.1979**

(73) Patentinhaber: **Mantis ULV-Sprühgeräte GmbH**
**Am Schiffbeker Berg 14**
**D-2000 Hamburg 74 (DE)**

(72) Erfinder: **Dopp, Siegfried**
**Klaus-Schaumann-Strasse 63**
**D-2050 Hamburg 80 (DE)**

(74) Vertreter: **Meyer, Ludgerus**
**Patentanwälte Meyer, Stach, Vonnemann**
**Jungfernstieg 38**
**D-2000 Hamburg 36 (DE)**

**EP 0 150 766 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft eine Vorrichtung zum Feuchtbeizen von Saatgut, insbesondere Getreide, mit einer im wesentlichen rotationssymetrischen Beizkammer mit vom Außenumfang zu einer zentrischen Austrittsöffnung geneigt abfallender Bodenwand, einer konzentrisch darüber angeordneten, auswärts geneigt abfallenden Oberwand und einem zwischen deren Außenrand und der Bodenwand gebildeten ringförmigen Einlaßschlitz für das Saatgut, mindestens einer in der Beizkammer angeordneten Sprühvorrichtung zum Besprühen des im Betrieb auf der Innenfläche der Bodenwand zur Austrittsöffnung bewegten Saatguts, einem über der Beizkammer angeordneten, das zu beizende Saatgut aufnehmenden Füllbehälter mit einer über der Oberwand konzentrisch angeordneten Durchflußöffnung, Vorrichtungen zur dosierten Zuführung von Beizflussigkeit zu jeder Sprühvorrichtung sowie Vorrichtungen zur Regelung der Saatgutzuführ.

Die in der deutschen Schrift DE—B—1 211 013 beschriebene Vorrichtung dieser Art weist einen unmittelbar unterhalb der Austrittsöffnung eines Vorratsbehälters angeordneten, das Sattgut in einen Schleier auflössenden Streukegel und eine unter diesem axial angeordnete Schleuderscheibe für das Vernebeln des Beizmaterials auf, wobei der Steukegel in Drehbewegung versetzbar ist und über dem Streukegel, koaxial zu diesem und mit ihm umlaufend eine in den Vorratsbehälter hineinragende Förderschnecke angeordnet ist. Die Auslaßöffnung des Vorratsbehälters ist von einem Kragenteil umgeben, daß gegenüber der Oberfläche des Streukegels in einem bestimmten Abstand—entsprechend dem zu behandelnden Saatgut—einstellbar ist. Die Einstellung des Kragenteils erfolgt über eine Handkurbel mit Gewindespindel und Hebelgestänge.

Die einer bestimmten Saatgutmenge zuzuführende Beizmittelmenge ist gewichtsmäßig innerhalb enger Grenzen gesetzlich festgelegt; das Beizmittel muß möglichst gleichmäßig und allseitig auf die Saatgutkörner aufgebracht werden. Das Kragenteil der bekannten Vorrichtung kann einen hinreichend gewichtskonstanten Saatgutfluß durch die Vorrichtung nicht gewährleisten, so daß es zu erheblichen Schwankungen der Mengenverhältnisse von Saatgut und Beizmittel kommt. Eine exakte Voreinstellung der Durchflußmengen für verschiedene Saatgutarten und unterschiedliche Durchsätze ist praktisch nicht möglich. Zur Auflösung das zugeführten Saatgutes in einen schleierartigen Saatgutstrom sind aufwendige mechanische Teile erforderlich, die leicht Anlaß von Betriebsstörungen sein können.

Aufgabe der Erfindung ist es daher, eine einfache und unaufwendige Vorrichtung zum Feuchtbeizen von Saatgut der eingangs genannten Art zu schaffen, die ein schnelles gleichmäßiges Aufbringen der Beizflüssigkeit auf das Saatgut unter genauer Einhaltung und Reproduzierbarkeit vorbestimmter Gewichtsverhältnisse gestattet.

Zur Lösung dieser Aufgabe ist die Vorrichtung der eingangs genannten Art erfindungsgemäß mit den im kennzeichnenden Teil des Anspruchs 1 angegebenen Merkmalen ausgestattet.

Die Erfindung bewirkt eine Zuführung des Saatgutes in gleichbleibenden Gewichtsanteilen zur Beizkammer, wobei Unterschiede in Form, Feuchtigkeit, Oberflächeneigenschaften, spezifischem Gewicht usw, zwischen verschiedenen Saatgutchargen bzw, -arten und Schwankungen in der vom Füllbehälter nachfließenden Saatgutmenge automatisch ausgeglichen werden. Dadurch ist die genaue Einhaltung und Reproduzierbarkeit der vorgegebenen Gewichtsverhältnisse in einfacher und unaufwendiger Weise gewährleistet.

Vorteilhafte weitere Ausgestaltungen sind in den Unteransprüchen 2 bis 12 beschrieben.

Die Verstellbarkeit der Breite des Ringspalts in der Ruhestellung des Dosierstutzens erlaubt eine zuverlässige Vorwahl des Saatgut-Durchsatzes pro Zeiteinheit. Diese Voreinstellung wird zur entsprechenden Regelung der Zuführung von Beizflüssigkeit erfaßt. Des Saatgut wird unter Besprühen auf der Innenfläche der Bodenwand zur Austrittsöffnung bewegt und dabei durch die vertikale Vibration der Bodenwand fortwährend hochgeworfen. Dadurch wird das Saatgut gleichmäßiger allseitig von Beizflüssigkeit benetzt als bisher.

Im folgenden werden bevorzugte Ausführungsformen der Vorrichtung auhand der beigefügten Zeichnungen weiter erläutert.

Es zeigen:

Fig. 1 einen perspektivischen Teilschnitt der Vorrichtung ohne den Füllbehälter;

Fig. 2 einen schematischen Teilschnitt einer bevorzugten Ausführungsform der Vorrichtung und

Fig. 3 eine schematische Darstellung einer abgewandelten Vorrichtung.

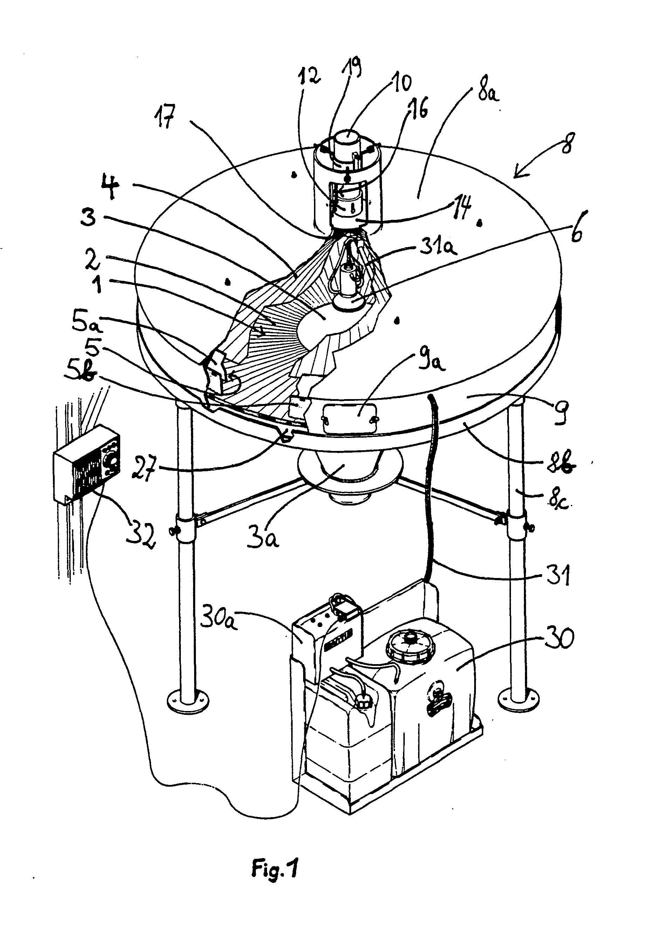

Die in Fig. 1 unter Fortlassung des Füllbehälters dargestellte erfindungsgemäße Vorrichtung weist eine im wesentlichen rotationssymmetrische Beizkammer 1 mit vom Außenumfang zu einer zentrischen Austrittsöffnung 3 geneigt abfallender Bodenwand 2, einer konzentrisch darüber angeordneten auswärts geneigt abfallenden Oberwand 4 und einem zwischen deren Außenwand 4a und der Bodenwand 2 gebildeten ringförmigen Einlaßschlitz 5 für das Saatgut auf. Ein mit der Austrittsöffnung 3 kommunizierender Austrittsstutzen 3a ist unterhalb der Bodenwand 2 angeordnet.

Am Außenumfang eines Gehäuse-Oberteils 8a steht ein ringförmiger Leitstag 5a axial abwärts vor, an dessen Unterkante ein elastischer ringförmiger Leitstreifen 5b so angeordnet ist, daß er sich axial abwärts bis zur Bodenwand 2 erstreckt. Leitsteg 5a und Leitstreifen 5b dienen zum Überführen des auf der Außenfläche der Oberwand 4 zum Außenrand 4a hin bewegten Saatgutes auf die Innenfläche der Bodenwand 2. Die Beizkammer 1 ist in einem Gehäuse 8 aufgenommen, wobei zwischen dem Oberteil 8a und einem Unterteil 8b des Gehäuses 8 ein Ringsteg 9 mit einer den Zutritt zur Beizkammer 1 ermöglichenden, verschließbaren Inspektionsöffnung 9a vorgesehen ist. Alternativ dazu kann der Ringsteg 9 als elastischer Abschlußstreifen ausgeführt werden, wobei dann Oberteil 8a und Unterteil 8b des Gehäuses 8 durch geeignete Verbindungselemente zusammengehalten werden und die Inspektionsöffnung 9a fehlen kann.

Das Gehäuse 8 steht auf mit dem Unterteil 8b verbundenen Ständern 8c, die am Fußboden verschraubt werden können. Auf der Innenseite des Gehäuse-Unterteils 8b liegt nahe dessen Umfangskante ein ringförmiges elastisches Pufferteil 27, auf dem die Bodenwand 2 der Beizkammer 1 gelagert ist.

In der Beizkammer 1 ist eine Spruhvorrichtung 6 zum Besprühen des im Betrieb auf der Innenfläche der Bodenwand 2 zur Austrittsöffnung 3 bewegten Saatguts angeordnet. Im Betrieb wird flüssiges Beizmittel von einer Pumpe 30a aus einem Vorratsbehälter 30 über einen Schlauch 31 und eine durch die Beizkammer 1 zur Sprühvorrichtung 6 führenden Zuführleitung 31a zugeführt. Eine Schaltvorrichtung 32 dient zur Stromversorgung und Betriebsregelung der Pumpe 30a und der Sprühvorrichtung 6.

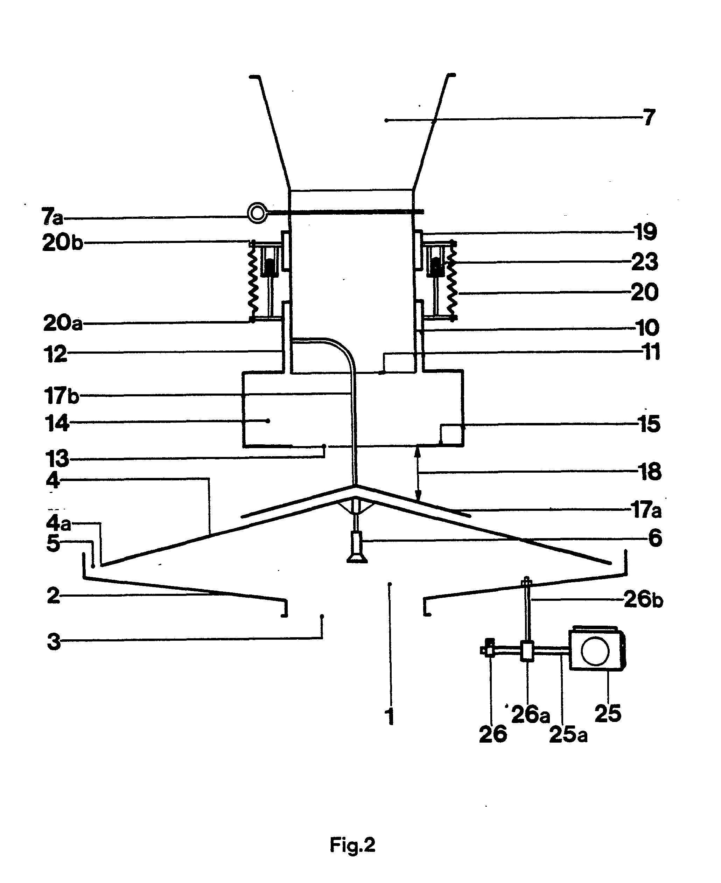

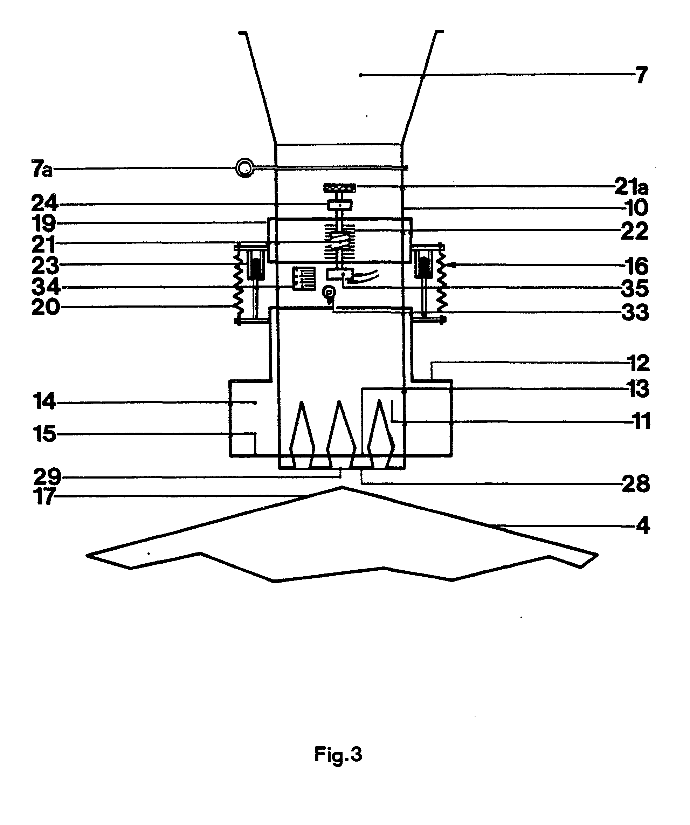

Im folgenden werden Einzelheiten der Vorrichtungen zur Regelung der Saatgutzufuhr anhand der Figuren 1 bis 3 beschrieben. An der Unterseite des Füllbehälters 7 ist ein zylindrisches Fallrohr 10 mit einer vom unteren Ende der geschlossenen Fallrohrwand gebildeten, zur Oberwand 4 der Beizkammer 1 konzentrischen Mündungsöffnung 11 angeordnet. Das Fallrohr 10 weist eine konstante lichte Weite von 90 mm auf. Auf dem Fallrohr 10 ist ein dessen unteren Abschnitt umschließender Dosierstutzen 12 mit einer koaxial vor der Mündungsöffnung 11 des Fallrohres 10 liegenden Auslaßöffnung 13 axial verschiebbar geführt. Der Durchmesser der Auslaßöffnung 13 des Dosierstutzens 12 entspricht bei den in den Figuren 1 und 2 gezeigten Ausführungsformen genau dem Durchmesser der Mündungsöffnung 11 des Fallrohres 10, bei der in Figur 3 gezeigten Ausführungsform ist er geringfügig größer.

Der Dosierstutzen 12 weist an seinem unteren Endabschnitt eine koaxiale Ringausbauchung 14 gleichbleibenden Querschnitts mit einer deren Unterseite bildenden, radial einwärts geneigten ringförmigen Auffangfläche 15 auf. Die Auffangfläche 15 bildet den Rand der Auslaßöffnung 13 des Dosierstutzens 12. Unter der Auslaßöffnung 13 des Dosierstutzens 12 ist eine zu diesem konzentrische Prallfläche 17 angeordnet, die vom Mittelbereich der öffnungslosen Oberwand 4 der Beizkammer 1 gebildet wird. Die Prallfläche 17 leitet das Saatgut auf die Oberwand 4 der Beizkammer 1 über.

Ein Tragring 19 umgibt koaxial das Fallrohr 10 und ist an diesem verschiebbar und feststellbar. Der Tragring 19 dient sie Tragstruktur für Kraftspeichervorrichtungen 16 bildende, mit einem Ende 20a am Dosierstutzen 12 und mit dem anderen Ende 20b am Tragring 19 angreifende Federvorrichtungen 20, Schwingungsbewegungen des über die Federvorrichtungen 20 mit dem Tragring 19 verbundenen Dosierstutzens 12 werden durch mit diesem und mit dem Tragring 19 verbundene Dämpfvorrichtungen 23 gedämpft. Die Stellvorrichtungen zur Änderung der Position des Trägrings 19 auf dem Fallrohr 10 umfassen eine fest mit dem Tragring 19 verbundene Stellzahnstange 22 im dauernden Eingriff mit einer Stellschnecke 21, die bei 24 am Fallrohr 10 gelagert und über einen Betätigungsgriff 21a verdrehbar ist und dabei in die Stellzahnstange 22 eingreifend den Tragring 19 koaxial am Fallrohr 10 verschiebt. Durch diese Verschiebung ist an einer Skala 34 die Breite des Ringspalts 18 zwischen dem Rand der Auslaßöffnung 13 und der Prallfläche 17 in der Ruhestellung des Dosierstutzens 12 einstellbar. Der Ringspalt 18 wird durch entsprechende Verschiebung des Tragringes 19 so eingestellt, daß der Durchlaßquerschnitt des Ringspalts 18 kleiner ist als der Querschnitt der Auslaßöffnung 13. Die Kraftspeichervorrichtungen 16 und das Gewicht des Dosierstutzens 12 sind so ausgelegt, daß der Dosierstutzen 12 im Betrieb die Breite des Ringspaltes 18 jeweils unter dem Einfluß des in der Ringausbauchung 14 lastenden Saatgutgewichts selbsttätig regelt, wie später noch eingehender beschrieben wird. Der Dosierstutzen 12 betätigt in seiner Ruhestellung einen Abschalter 33, der die Pumpe 30a stillsetzt, so daß eine Beizmittel-Zuführung zur Sprühvorrichtung 6 nur erfolgt, wenn der Dosierstutzen 12 durch in die Beizkammer 1 fließendes Saatgut aus seiner Ruhestellung ausgelenkt wird.

Die Breite des Ringspaltes 18 in der Ruhestellung wird durch eine mit den Stellvorrichtungen 21, 22 zusammenwirkende Regelvorrichtung 35 erfaßt, die eine entsprechende Regelung der Zuführung von Beizflüssigkeit zur Sprühvorrichtung 6 durch entsprechende Anpassung der Pumpenleistung ermöglicht.

Im Betrieb fließt das Saatgut, gegebenenfalls nach Öffnen eines oberhalb der Vorrichtungen zur Regelung der Saatgut-Zuführ im Fallrohr angeordneten Absperrschiebers 7a, vom Füllbehälter 7 durch das Fallrohr 10, wobei es zum Teil auf die Auffangfläche 15 der Ringausbauchung 14 gelangt und durch den Aufprall sowie sein Gewicht den Dosierstutzen 12 gegen die Wirkung der Federvorrichtungen 20 in Richtung auf die Prallfläche 17 hin auslenkt. Durch diese Auslenkung füllt sich die Ringausbauchung 14 noch mehr mit Saatgut und gelangt kurzzeitig unter weitgehender Schließung des Ringspaltes 18 dicht an die Prallfläche 17 heren. Nach vollständiger Füllung der Ringausbauchung 14 mit Saatgut wird der Dosierstutzen unter der Einwirkung der Federvorrichtungen 20 wieder soweit von der Prallfläche 17 weg angehoben, daß Saatgut durch den Ringspalt 18 abfließen kann. Die Größe des im Betrieb entstehenden Ringspaltes 18, der kleiner ist als in der Ruhestellung des Dosierstutzens 12, wird dabei durch das spezifiche Gewicht des in der Ringausbauchung 14 lastenden Saatguts und durch einen zusätzlichen Reibungsbeitrag bestimmt, der von der Wechselwirkung zwischen in der Ringausbauchung 14 festliegenden und an diesen vorbeifließenden Saatgutkörnern herrührt. Dynamische Strömungsschwankungen im Fallrohr 10 werden dabei durch entsprechende kleine axiale Bewegungen des Dosierstutzens 12 ausgeglichen. Nach Durchtritt durch den Ringspalt 18 fließt das Saatgut über die Prallfläche 17, die vom Mittenbereich der öffnungslosen Oberwand 4 der Beizkammer 1 gebildet sein kann (Figuren 1 und 3), alternativ ist es z.B. auch möglich, wie in Figur 2 gezeigte, eine von der Oberwand 4 der Beizkammer 1 getrennte Prallfläche in Form eines Pralltеils 17a vorzusehen, das an einer fest mit dem Fallrohr 10 verbundenen Haltestange 17b befestigt ist. So kann zur Abänderung der Ringspaltgröße bzw. -geometrie ein Prallteil 17a verwendet werden, das eine von der Oberwand 4 der Beizkammer 1 verschiedene Form aufweist.

Das Saatgut fließt über die Oberwand 4 der Beizkammer 1, die die Form eines Kegelmantels mit einer auswärts abfallenden, das Saatgut zum Außenrand abführenden Neigung von ungefähr 20 Grad aufweist, und gelangt durch den Einlaßschlitz 5 auf die Innenfläche der Bodenwand 2. Diese ist, wie Figur 2 zeigt, über Verbindungsstangen 26b mit einem Kugellager 26a verbunden, durch das die Antriebswelle 25a eines Motors 25 passend geführt ist. Auf der vom Motor 25 abgewandten Seite des Kugellagers 26a trägt die Antriebswelle 25a eine als Unwuchtelement dienende Schelle 26, die die Antriebswelle 25a umschließt und einseitig radial von ihr absteht. Im Betrieb rotiert die Antriebswelle 25a mit 2.500 bis 3.000 UpM; die durch das Unwuchtelement 26 hervorgerufenen Schwingungen werden über die Verbindungsstangen 26b auf die Bodenwand 2 und gegebenenfalls auch auf die Oberwand 4 der Beizkammer 1 übertragen und erzeugen eine im wesentlichen vertikal gerichtete Vibration. Da die Beizkammer 1 über das elastische Pufferteil 27 vibrationsfähig gelagert ist und auch der Motor 25 an Schwingmetallen federnd befestigt ist, führt die entstehende starke Vibration nicht zur Beschädigung der Vorrichtung.

Die Bodenwand 2 ist nur unter einem Winkel von sieben Grad gegen die Horizontale geneigt, so daß das Saatgut ohne Vibrationsbewegung im wesentlichen nicht zur Austrittsöffnung 3 hin bewegt würde. Durch die Vibration der Bodenwand 2 wird das Saatgut jedoch unter fortdauerndem Hochwerfen und Wenden vom Einlaßschlitz 5 über die Bodenwand 2 zur Austrittsöffnung 3 gefördert. Dabei wird es durch die Sprühvorrichtung 6 allseitig mit Beizflüssigkeit benetzt, wobei die Zuführung von Beizflüssigkeit zur Sprühvorrichtung 6 über die Regelvorrichtung 35 genau entsprecehend der Gewichtsmenge des durch die Vorrichtung fließenden Saatguts geregelt wird. Das gebeizte Saatgut verläßt die Vorrichtung durch die Austrittsöffnung 3 und den Austrittsstutzen 3a.

Mit den in Figuren 1 und 2 gezeigten Vorrichtungen wurden jeweils Versuche durchegeführt, bei denen die jeweils zum Durchfluß von 25 kg Weizen. Hafer, Roggen und Gerste benötigten Zeiten in Abhängigkeit von der Einstellung des Tragringes 19 und damit von der Voreinstellung der Breite des Ringspaltes 18 in der Ruhestellung des Dosierstutzens 12 gemessen wurden. Die Breite des Ringspaltes 18 in der Ruhestellung betrug bei der Vorrichtung nach Fig. 1 4,2 cm für den größten Durchflußwert von etwa 10 Tonnen Saatgut pro Stunde und 2 cm für einen Durchsatz von ungefähr 4 Tonnen Saatgut pro Stunde. Die pro Zeiteinheit durch die Vorrichtung fließende Saatgut-Gewichtsmenge war dabei bei allen vier Saatgutsorten innerhalb einer Fehlergrenze von ca. 5 Prozent gleich, obwohl die verschiedenen Saatgutsorten um bis zu 40 Prozent unterschiedliche spezifische Gewichte aufwiesen.

Bei einem voreingestellten Durchsatz von 5,3 Tonnen Weizen pro Stunde wurde bei der Vorrichtung nach Fig. 2 gemessen, daß sich die Breite des Ringspaltes 18 von 37 mm in der Ruhestellung auf 20 mm beim Durchfließen des Saatgutes verminderte. Der Dosierstutzen 12 wurde sofort bei Beginn des Saatgut-Durchflusses bis zur Schließung des Ringspaltes 18 ausgelenkt und nahm anschließend ohne wesentliche Einschwingvorgänge seine Betriebsstellung ein, um die er unter dem Einfluß das durchfließenden Saatgutes nachfolgend nur noch kleine, unregelmäßige Schwingungen von insgesamt etwa 2 mm ausführte. Die zeitliche Konstanz der durch die Vorrichtung fließenden Saatgut-Gewichtsmengen konnte durch eine unter dem Austrittsstutzen 3a aufgestellte Waage mit einem Auffanggefäß überwacht werden.

Die Förderleistung der Pumpe 30a für die Beizflüssigkeit ist über die Regelvorrichtungen 24 mit den Stellvorrichtungen für die Relativposition des Tragringes 19 gekoppelt, daher ist es notwendig, daß die Verstellungsschritte des Tragringes 19 einfach proportionale Änderungen der Beizflüssigkeits-Zuführung bewirken.

Nun ist bei den in Figuren 1 und 2 gezeigten Ausführungsformen bei hohen Durchsätzen eine gewisse Abweichung von dieser Linearität festzustellen, d.h. die Vergrößerung der Breite des Ringspaltes 18, die einer Änderung von 4 Tonnen Saatgut pro Stunde auf 5 Tonnen Saatgut pro Stunde entspricht, ist nicht gleich der Vergrößerung der Breite des Ringspaltes 18, die einer Änderung des Durchsatzes von 9 Tonnen Saatgut pro Stunde auf 10 Tonnen Saatgut pro Stunde entspricht. Während zur Abstellung dieser Störung eine geeignete, nichtlineare Kopplung zwischen Stellvorrichtungen 21, 22 und Regelvorrichtungen 24 verwendet werden kann, kann die Nichtlinearität andererseits durch die in Figur 3 dargestellte abgewandelte Ausführungsform überwunden werden, bei der das Fallrohr 10 an der Mündungsöffnung 11 axial vorstehende Wandsegmente 28 aufweist, die in der Ruhestellung des Dosierstutzens 12 durch dessen Auslaßöffnung 13 in Richtung auf die Prallfläche 17 vorstehen. Die zwischen den Wandsegmenten 28 liegenden Wandöffnungen 29 sind im wesentlichen rautenförmig. Bei dieser Ausführungsform wird für kleine Durchsatz-Voreinstellungen der Dosierstutzen 12 gegenüber dem Fallrohr 10 in der Ruhestellung soweit an die Prallfläche 17 angenähert eingestellt, daß seine Auslaßöffnung unterhalb der Wandsegmente 28 liegt. Die Funktionsweise entspricht dann vollständig den bereits anhand der Figuren 1 und 2 beschriebenen Ausführungsformen. Für höhere Durchsätze wird der Dosierstutzen jedoch durch entsprechendes Verstellen des Tragrings 19 soweit von der Prallfläche 17 entfernt, daß seine Auslaßöffnung 13 in der Ruhestellung die seitlichen Wandöffnungen 29 zwischen den Wandsegmenten 28 umschließt. Nach Eintritt von Saatgut durch die Wandöffnungen 29 bzw. gegebenenfalls oberhalb dieser vorzusehenden Durchlaßöffnungen wird der Dosierstutzen 12 in der genannten Weise in Richtung auf die Prallfläche 17 ausgelenkt und die Ringausbauchung 14 mit Saatgut angefüllt. Während das Saatgut nachfolgend durch die Vorrichtung fließt, bewegt sich die Auslaßöffnung 13 des Dosierstutzens 12 bei hohen Durchsätzen dann im Bereich der axialen Erstreckung der Wandsegmente 28. Der Ringspalt 18 wird bei diesem Betriebszustand also durch die vorstehenden Wandsegmentbereiche in seiner Breite und Geometrie verändert, was den Ausgleich der nicht streng linearen Beziehung zwischen Ringspaltbreite und Durchflußmenge bei hohen Durchsätzen gewährleistet. Die Wandsegmente 28 tragen eine einwärts vorspringende, ringstegartige Prallfläche, die sie untereinander verbindet. Die Prallfläche weist eine Mittelöffnung von etwa dem halben Durchmesser der Mündungsöffnung 11 des Fallrohres 10 auf und ist radial auswärts kegelartig so geneigt, daß Saatgut von ihrer radial auswärts durch die Wandöffnungen 29 abgleiten kann. Statt einer solchen ringstegartigen Prallfläche können auch z.B. einzelne Wandsegmente 28 mit einwärts vorstehenden Prallflächen versehen sein.

**Patentansprüche**

1. Vorrichtung zum Feuchtbeizen von Saatgut, insbesondere Getreide, mit einer im wesentlichen rotationssymmetrischen Beizkammer (1) mit vom Außenumfang zu einer zentrischen Austrittsöffnung (3) geneigt abfallender Bodenwand (2), auswärts geneigt abfallender Oberwand (4) und einem zwischen deren Außenrand (4a) und der Bodenwand (2) gebildeten ringförmigen Einlaßschlitz (5) für das Saatgut, mindestens einer in der Beizkammer (1) angeordneten Sprühvorrichtung (6) zum Besprühen des im Betrieb auf der Innenfläche der Bodenwand (2) zur Austrittsöffnung (3) bewegten Saatgutes, einem senkrechten Saatgut-Zuführrohr mit konzentrisch über der Beizkammer (1) liegender Mündungsöffnung (11), einem den Endabschnitt des Saatgut-Zuführrohrs umschließenden, relativ zu diesem koaxial verschiebbaren Dosierstutzen (12) sowie Vorrichtungen zur dosierten Zuführung von Beizflüssigkeit zu jeder Sprühvorrichtung (6), dadurch gekennzeichnet, daß

a) das Zuführrohr als Fallrohr (10) mit im wesentlichen axial frei durchgehendem lichten Innenraum ausgebildet ist,

b) der Dosierstutzen (12) eine innere Ausbauchung (14) mit einer deren Unterseite bildenden, im wesentlichen radial einwärts gerichteten Auflagefläche (15) unf einer koaxial unter der Mündungsöffnung (11) des Fallrohres (10) liegenden Auslaßöffnung (13) aufweist, deren Durchmesser kleiner oder im extremen Fall geringfügig größer sein kann als die Mündungsöffnung (11).

c) in einem Abstand unter der Auslaßöffnung (13) des Dosierstutzens (12) eine zu diesem konzentrische Prallfläche (17) angeordnet ist,

d) der Dosierstutzen (12) durch elastisch verformbare Kraftspeichervorrichtungen (16) permanent in eine Ruhestellung gedrängt wird, in welcher zwischen dem Rand der Auslaßöffnung (13) und der Prallfläche (17) ein Ringspalt (18) mit vorbestimmten, relativ zur Auslaßöffnung (13) kleineren Durchlaßquerschnitt verbleibt und

e) die Kraftspeichervorrichtungen (16) und die Ausbauchung (14) so ausgelegt sind, daß sich im Betrieb die Breite des Ringspalts (18) jeweils unter dem Einfluß des auf der Auflagefläche (15) der Ausbauchung (14) lastenden Saatgutes selbsttätig regelt.

2. Vorrichtung nach Anspruch 1, dadurch gekennzeichnet, daß im oberen Teil des Fallrohres (10) ein Absperrschieber (7a) angeordnet ist.

3. Vorrichtung nach Anspruch 1 oder 2, dadurch gekennzeichnet, daß der Dosierstutzen (12) an seinem unteren Endabschnitt eine koaxiale Ringausbauchung (14) gleichbleibenden Querschnitts mit ringförmiger Auflagefläche (15) aufweist.

4. Vorrichtung nach einem der Ansprüche 1 bis 3, dadurch gekennzeichnet, daß die Kraftspeichervorrichtungen (16) wenigstens eine mit einem Ende (20a) am Dosierstutzen (12) und mit dem anderen Ende (20b) an einer Tragstruktur, vorzugsweise an einem koaxial zum Fallrohr (10) verstellbaren Tragring (19) angreifende Federvorrichtung (20) umfassen.

5. Vorrichtung nach einem der Ansprüche 1 bis 4, dadurch gekennzeichnet, daß Stellvorrichtungen (21, 22) zur manuellen oder automatischen Einstellung der Breite des Ringspalts (18) in der Ruhestellung vorgesehen sind.

6. Vorrichtung nach einem der Ansprüche 1 bis 5, gekennzeichnet durch Dämpfvorrichtungen (23) zur Schwingungsdämpfung des Dosierstutzens (12).

7. Vorrichtung nach einem der Ansprüche 1 bis 6, dadurch gekennzeichnet, daß die jeweilige Breite des Ringspalts (18) erfassende Meßvorrichtungen (24) sowie von diesen betätigte Regelvorrichtungen zur jeweils auf die Breite des Ringspalts (18) abgestimmten Zuführung von Beizflüssigkeit zu jeder Sprühvorrichtung (6) vorgesehen sind.

8. Vorrichtung nach einem der Ansprüche 1 bis 7, dadurch gekennzeichnet, daß die Prallfläche (17) durch den zentrischen Mittelbereich der auswärts konisch abfallenden Oberwand (4) der Beizkammer (1) gebildet wird.

9. Vorrichtung nach einem der Ansprüche 1 bis 8, dadurch gekennzeichnet, daß die Beizkammer (1) vibrations fähig gelagert ist und Vorrichtungen (25, 26) zur Erzeugung einer im wesentlichen vertikal gerichteten vibration der Bodenwand (2) und gegebenenfalls der Oberwand (4) der Beizkammer (1) vorgesehen sind.

10. Vorrichtung nach einem der Ansprüche 1 bis 9, dadurch gekennzeichnet, daß das Fallrohr (10) an der Mündungsöffnung (11) axial vorstehende, gegebenenfalls in der Ruhestellung des Dosierstutzens (12) durch dessen Auslaßöffnung (13) ragende Wandsegmente (20) trägt und zwischen diesen im wesentlichen rauten- oder trapezförmige Wandöffnungen (29) mit in Richtung auf die Prallfläche (17) abnehmender Breite angeordnet sind.

11. Vorrichtung nach Anspruch 10, dadurch gekennzeichnet, daß die Wandsegmente (28) eine einwärts vorspringende, vorzugsweise ringförmige Prallfläche tragen.

12. Vorrichtung nach einem der Ansprüche 7 und 9 bis 11, dadurch gekennzeichnet, daß am Fallrohr (10) eine mit diesem über eine Halterung (17b) fest verbundene, von der Oberwand (4) der Beizkammer (1) getrennte Prallfläche (17a) vorgesehen ist.

**Revendications**

1. Dispositif de désinfection humide de semences, en particulier de céréales, comportant une chambre de désinfection (1) sensiblement symétrique en rotation, avec une paroi de fond (2) descendant de manière inclinée de la paroi extérieure à un orifice de sortie central (3), une paroi supérieure (4) descendant de manière inclinée vers l'extérieur et une fente d'admission (5) de forme annulaire pour les semences, constituée entre sa bordure extérieure (4a) et la paroi de fond (2), avec au moins un dispositif d'aspersion (6) disposé dans la chambre de désinfection (1), pour asperger les semences se déplaçant en marche sur la surface interne de la paroi de fond (2) vers l'orifice de sortie (3), avec un tube vertical d'alimentation en semences comportant une ouverture d'embouchure (11) située concentriquement au-dessus de la chambre de désinfection (1), avec une tubulure de dosage (12) entourant la partie d'extrémité du tube d'alimentation de semences, susceptible de coulisser coaxialement par rapport à lui, ainsi que des dispositifs destinés à l'alimentation dosée de liquide désinfectant à chaque dispositif d'aspersion (6) caractérisé en ce que:

a) le tube d'alimentation est réalisé sous la forme d'un tube de chute (10) à espace intérieur libre continu sensiblement axialement,

b) la tubulure de dosage (12) présente un évasement interne (14) avec une surface d'appui (15) constituant su face inférieure, orientée sensiblement radialement vers l'intérieur, et un orifice de sortie (13) situé coaxialement au-dessous de l'orifice d'embouchure (11) du tube de chute (10), dont le diamètre peut être inférieur ou dans un cas extrême, légèrement plus grand que l'orifice d'embouchure (11),

c) une surface d'impact (17), concentrique à la tubulure de dosage (12), est disposée à distance, au-dessous de l'orifice de sortie (13) de celle-ci,

d) la tubulure de dosage (12) est traversée en permanence par des dispositifs d'accumulation de force élastiquement déformables, en position de repos, dans laquelle il subsiste un interstice annulaire (18), présentant une section de passage déterminée, inférieure à celle de l'orifice de sortie (13), entre le bord de l'ouverture de sortie (13) et la surface d'impact (17),

e) les dispositifs d'accumulation de force (16) et l'évasement (14) sont déterminés de façon, qu'en fonctionnement, la largeur de l'interstice annulaire (18) produise chaque fois un réglage automatique, sous l'influence des semences chargeant la surface d'appui (15) de l'évasement (14).

2. Dispositif selon la revendication 1, caractérisé en ce qu'un registre d'obturation (7a) est disposé à la partie supérieure du tube de chute (10).

3. Dispositif selon la revendication 1 ou 2, caractérisé en ce que la tubulure de dosage (12) présente à sa partie d'extrémité inférieure un évasement annulaire coaxial (14) de section transversale constante, avec la surface d'appui annulaire (15).

4. Dispositif selon l'une des revendications 1 à 3, caractérisé en ce que les dispositifs d'accumulation de force (16) comprennent au moins un dispositif à ressort (20) agissant par une extrémité (20a) sur la tubulure de dosage (12) et par l'autre extrémité (20b) sur une structure porteuse, de préférence sur un anneau support (19) réglable coaxialement par rapport au tube de chute (10).

5. Dispositif selon l'une des revendications 1 à 4, caractérisé en ce que des dispositifs de réglage (21, 22) sont prévus en vue de régler manuellement ou automatiquement la largeur de l'interstice annulaire (18), en position de repos.

6. Dispositif selon l'une des revendications 1 à 5, caractérisé par des dispositifs amortisseurs (23) en vue de l'amortissement des vibrations de la tubulure de dosage (12).

7. Dispositif selon l'une des revendications 1 à 6, caractérisé en ce qu'il est prévu des dispositifs de mesure (24), mesurant la largeur respective de l'interstice annulaire (18), ainsi que des dispositifs de réglage actionnés par ceux-ci, en vue de l'alimentation sur toute la largeur de l'interstice annulaire (18) en liquide désinfectant, vers chaque dispositif d'aspersion (6).

8. Dispositif selon l'une des revendications 1 à 7, caractérisé en ce que la surface d'impact (17) est constituée par la zone centrale de la paroi supérieure, descendant coniquement vers l'extérieur de la chambre de désinfection (1).

9. Dispositif selon l'une des revendications 1 à 8, caractérisé en ce que la chambre de désinfection est montée de manière à pouvoir vibrer et qu'on a prévu des dispositifs (25, 26) destinés à produire une vibration orientée sensiblement verticalement de la paroi de fond (2) et, le cas échéant, de la paroi supérieure (4) de la chambre de désinfection (2).

10. Dispositif selon l'une des revendications 1 à 9, caractérisé en ce que, sur l'orifice d'embouchure (11), le tube de chute (10) porte des segments de paroi (20) en saillie axialement, pénétrant le cas échéant dans l'orifice de sortie (13) de la tubulure de dosage (12), lorsqu'elle est en position de repos, et que des orifices de paroi (29), de forme sensiblement en trapèze ou en losange, de largeur diminuant en direction de la surface d'impact (17) sont disposés entre ces segments (20).

11. Dispositif selon la revendication 10, caractérisé en ce que les segments de paroi (28) portent une surface d'impact de préférence de forme annulaire, saillant intérieurement.

12. Dispositif selon l'une des revendications 7 et 9 à 11, caractérisé en ce qu'une surface d'impact (17a), séparée de la paroi supérieure (4) de la chambre de désinfection (1), est prévue sur le tube de chute (10) en lui étant reliée rigidement.

**Claims**

1. A device for the humid dressing of seeds, more particularly grain, comprising an essentially rotationally symmetrical dressing chamber (1) with a base wall (2), which slopes downwards from the outer circumference towards a central outlet opening (3), an upper wall, (4) which slopes downwards towards the outside, and an annular inlet slot (5) formed between the outer edge (4a) of the upper wall (4) and the base wall (2) for the seeds, at least one spraying device (6) arranged in the dressing chamber (1) for spraying the seeds which move during operation along the inner surface of the base wall (2) towards the outlet opening (3), a vertical seed supply pipe with a mouth (11) lying concentrically above the dressing chamber (1), a metering socket (12), which encloses the end section of the seed supply pipe and can be displaced coaxially thereto, and devices for the metered supply of dressing fluid to each spraying device (6), characterised in that

a) the supply pipe is designed as a down pipe (10) having an inner chamber with an essentially clear axial passage,

b) the metering socket (12) comprises an inner enlarged section (14) with a radially inwardly directed bearing surface (15) forming the underside of the said inner enlarged section and an outlet opening (13) lying coaxially beneath the mouth (11) of the down pipe (10), the diameter of the said outlet opening (13) being smaller or in extreme cases slightly larger than the mouth (11),

c) at a distance beneath the outlet opening (13) of the metering socket (12), a deflecting surface (17) is arranged concentric to the said metering socket (12),

d) the metering socket (12) is permanently forced by elastically deformable power storage devices (16) into an inoperative position, in which an annular gap (18) remains between the edge of the outlet opening (13) and the deflecting surface (17), the said gap having a predetermined passage cross section which is smaller than the outlet opening (13), and

e) the power storage devices (16) and the enlarged section (14) are designed in such a manner that, during operation, the width of the annular gap (18) is automatically adjusted as a function of the seed loading the bearing surface (15) of the enlarged section (14).

2. A device according to claim 1, characterised in that a gate valve (7a) is arranged in the upper part of the down pipe (10).

3. A device according to claim 1 or 2, characterised in that at its lower end section, the metering socket (12) comprises a coaxial annular enlarged section (14) having a constant cross section with an annular bearing surface (15).

4. A device according to one of claims 1 to 3, characterised in that the power storage device (18) comprise at least one spring device (20) acting with one end (20a) on the metering socket (12) and with the other end (20b) on a supporting structure, preferably a supporting ring (19) which can be adjusted coaxially relative to the down pipe (10).

5. A device according to one of claims 1 to 4, characterised in that adjusting devices (21, 22) are provided for the manual or automatic adjustment of the width of the annular gap (18) in the inoperative position.

6. A device according to one of claims 1 to 5, characterised by damping devices (23) for the vibration absorption of the metering socket (12).

7. A device according to one of claims 1 to 6, characterised in that measuring devices (24) are provided, which determine the respective width of the annular gap (18), and adjusting devices actuated by the said measuring devices for providing a supply of dressing fluid to each spraying device (6) adapted to the width of the annular gap (10).

8. A device according to one of claims 1 to 7, characterised in that the deflecting surface (17) is formed by the central region of the conically outwardly sloping upper wall (4) of the dressing chamber (1).

9. A device according to one of claims 1 to 8, characterised in that the dressing chamber (1) is mounted so that it can vibrate and devices (25, 26) are provided for producing an essentially vertical vibration of the base wall (2) and optionally of the upper wall (4) of the dressing chamber (1).

10. A device according to one of claims 1 to 9, characterised in that the down pipe (10) is provided at the mouth (11) with axially projecting wall segments (28), which in the inoperative position of the metering socket (12) optionally project through the latter's outlet opening (13), and essentially lozenge-shaped or trapezoidal wall openings (29) having a width decreasing in the direction of the deflecting surface (17) are arranged between the wall segments (28).

11. A device according to claim 10, characterised in that the wall segments (28) comprise an inwardly projecting, preferably annular deflecting surface.

12. A device according to one of claims 7 and 9 to 11, characterised in that on the down pipe (10) a deflecting surface (17a) is provided, which is rigidly connected with the said down pipe (10) via a support (17b) and is separated from the upper wall (4) of the dressing chamber (1).

12
19
10
16
8a
17
8
4
14
3
6
31a
2
1
5a
5
9a
5b
9
27
8b
8c
32
3a
31
30a
30

Fig.1

7
7a
20b
19
23
20
20a
10
12
11
17b
14
15
13
18
4
17a
4a
6
5
2
26b
3
1
26
26a
25a
25

Fig.2

7
7a
21a
24
10
19
22
21
23
16
34
35
20
33
12
13
14
11
15
29
28
17
4

Fig.3